# EUROPEAN PATENT SPECIFICATION

(11) **EP 3 291 226 B1**
(45) Date of publication and mention of the grant of the patent: **04.11.2020**
(21) Application number: 16187302.1
(22) Date of filing: 05.09.2016
(51) Int. Cl.: G10L 21/02, H04M 3/56, G10L 21/0272, H04R 25/00

(54) **A METHOD OF TREATING SPEECH DATA, A DEVICE FOR HANDLING TELEPHONE CALLS AND A HEARING DEVICE**
VERFAHREN ZUR BEHANDLUNG VON SPRACHDATEN, VORRICHTUNG ZUR HANDHABUNG VON TELEFONANRUFEN UND HÖRGERÄT
PROCÉDÉ DE TRAITEMENT DE DONNÉES DE PAROLE, DISPOSITIF DE GESTION D'APPELS TÉLÉPHONIQUES ET APPAREIL AUDITIF

(43) Date of publication of application: 07.03.2018
(73) Proprietor: Unify Patente GmbH & Co. KG, 80807 München (DE)
(72) Inventor: Giatilis, Vasileios, 17561 Palaio Faliro (GR); Pappas, Lampros, 14121 Iraklio (GR)
(74) Representative: Fritzsche, Thomas

(56) References cited:
- US-A1- 2004 013 252
- US-A1- 2010 027 821
- US-A1- 2011 249 843
- US-A1- 2015 012 266
- US-A1- 2015 163 600
- US-A1- 2015 235 649

## Description

### TECHNICAL FIELD

The present application relates to method of treating speech data, to a device for handling conference telephone calls from a plurality of participants, and a hearing device as an in-the-ear, completely-in-canal or behind-the-ear hearing aid, an earphone, a hearing protection device, or a device which provides for ear-level communication, noise reduction or sound enhancement.

### TECHNICAL BACKGROUND

When treating speech data, it can presently be assumed that not only a single tone is included, but that rather the speech data have at least a first component at a first frequency and a second component at a second frequency different from the first frequency. These frequency components can, e.g., be obtained by frequency analysis such as a Fast Fourier Transformation. The component is defined by a value indicating the weight the first frequency has in the overall speech data, according to the frequency analysis.

It is hereinafter further assumed that the method is performed in a device which receives such speech data, be it directly from a microphone, be it from transmission lines coupled to a microphone external to the device. The device outputs the speech data it receives to a loudspeaker within a time period of not more than 1 second upon receipt, i.e. provides for a live speech-receiving effect, in contrast as, e.g., to recordings. If in the device, speech data are in any manner buffered, this buffering has the only purpose to handle the speech data and manipulate them before outputting same to the loudspeaker, but whilst still maintaining the feeling of a live conversation during a telephone call, namely during a conference telephone call, or the live effect of hearing by means of a hearing device, such as a hearing aid.

In the art, it is well-known to filter speech data. Such filtering generally maintains the general frequency composition of the speech data and only attenuates some of the components with respect to others. For instance, lower frequency components might be filtered with the effect of decreasing the value assigned to the component in the frequency analysis, whilst still maintaining the respective frequency as it is. In conjunction with microphones, such a filtering is, e.g. known for the use of two microphones from the Australian patent application AU 2016202314 A1.

The present method is inter alia suited for handling conference telephone calls from a plurality of participants. In such field, US 2016/0118047 A1 discloses a method and a system for using conversational biometrics and speaker identification, wherein different speakers are identified and there is a filtering such as to separate the overall signal into separate voice streams for each participant in the call.

The application of filters in a mixed audio signal as in a conference call is further discussed in US 2011/0044474 A1. Again, the filtering includes adjusting the individual volume level of the speech data, namely in a manner different for the individual participants, and the like.

The present method is equally well-suited to be used in hearing devices. The application US 2007/0237336 A1 relates to a speech canceler-enhancer system for use in call-center applications. US 2016/0105751 A1 refers to a hearing device such as a hearing aid, wherein an audio signal is filtered with a filter having a transfer function including a transfer function from an output of the receiver to an input of the ear canal microphone when the hearing device is turned on and being worn in an ear canal of the user, by computing a difference between the audio signal picked up by the ear canal microphone and the filtered signal, and detecting a presence of the own voice of the user based on the difference.

The methods disclosed in the above-cited documents and known in the art, all being based on reduction of a value assigned to a first component at a first frequency in speech data, possibly in a manner different from how a second component as a second frequency is adjusted, are rather complex and do not always provide for satisfying results.

Specifically, in the field of handling telephone calls with a plurality of participants (more than two participants), there might arise situations in which different speakers speak simultaneously, leading to there being a high difficulty for the listener to correctly understand what has been said by whom. Similarly, from hearing aids, the so-called "party effect" is known: in an environment where a plurality of persons speaks at the same time, it is difficult to concentrate on an individual person whom the one wearing the hearing aid would like to listen to.

US 2015/012266 A1 deals with talker collisions in an audio scene. From a plurality of received voice signals in a conferencing system, a signal interval in which there is a talker collision between at least a first and a second voice signal is detected. A processor receives a positive detection result and processes, in response to this, at least one of the voice signals with the aim of making it perceptually distinguishable. A mixer mixes the voice signals to supply an output signal, wherein the processed signal(s) replaces the corresponding received signals. For example, the signal content is shifted away from the talker collision in frequency or in time.

US 2015/163600 A1 discloses a method of processing a sound segment which can be used in a hearing aid. If the sound segment is a high-frequency type, the high-frequency portion of the sound segment will be processed with a frequency lowering process. If the sound segment is a mixed-frequency type (between high-frequency and low-frequency), the energy of at least some portion of the high-frequency portion of the sound segment will be decreased and then processed with a frequency lowering process.

US 2010/0027821 A1 discloses a hearing aid that can be operated by a user to highlight a specific audio signal, which is preferred, in contrast to an ambient sound.

### SUMMARY OF THE INVENTION

In view of the above, it is an object of the invention to provide a hearing device including a microphone (preferably also a loudspeaker), which better allows to distinguish individual speakers at a point in time when more than a single person is speaking.

The above problem is solved by the hearing device according to claim 1. Preferred embodiments are provided in the dependent claims.

The inventive hearing device is configured to treat speech data, in particular digital speech data, wherein the speech data generally has at least a first component at a first frequency and a second component at a second frequency different from said first frequency. The hearing device receives such speech data and outputs same to a loudspeaker within in a time period of not more than 1 second upon receipt, preferably of not more than 0.5 seconds upon receipt, still more preferably of not more than 0.3 seconds upon receipt, still further preferably of not more than 0.2 seconds upon receipt. According to the invention, the device determines whether or not a predetermined criterion is fulfilled. If the predetermined criterion is fulfilled, the first component of first speech data is shifted to a third frequency and the second component of the first speech data is shifted to a fourth frequency different from said third frequency.

The present invention introduces the idea to maintain the general composition with the first and second component at a first and second frequency, but assigns the values assigned to the first and second frequencies now to different frequencies, namely the third and fourth frequencies. This can most easily be done with digital speech data, wherein in the Fast Fourier Transform only the individual amplitudes (values assigned to the individual components) have to be assigned to the above frequencies. By shifting these components, the relative values between the components (first and second component) are maintained, thus maintaining the general character of an individual voice. Hence, the present method may correspond to a situation where a person first speaks at a lower frequency interval and then goes to a higher pitch frequency range during speaking.

In order to perfectly provide for such shifting, the third frequency is obtained by multiplying the first frequency by a first factor, and the fourth frequency is obtained by multiplying the second frequency by the same first factor. Hence, the ratio between the second and first frequency on the one hand and the fourth and third frequency on the other hand remains the same in order to most perfectly maintain the voice's character. The invention may deviate from this perfect shifting, e.g., due to using digital speech data or due to some additional listening effects being desired.

Further generally, the frequency shift should not be beyond 5 octaves, i.e. the first factor should not be more than 32 and is preferably not less than 0.03, or at least not less than 0.0075.

In a first alternative of the inventive method, the predetermined criterion is related to the speech data themselves. For instance, such speech data might be received in a conference telephone call handling device from a plurality of participants, and for assessing whether the predetermined criterion is fulfilled, it is determined whether first speech data are received by a first participant and second speech data by a second participant simultaneously. In other words, the method can then apply to either the first speech data or to the second speech data, or to both of them when two different kinds of speech data are identified (those from a first and from a second participant).

In this preferred alternative, the predetermined criterion might be defined so as not to be fulfilled if a simultaneous receipt of first and second speech data ends after a predetermined period of time, which is preferably a duration of between 0.1 seconds and 5 seconds, more preferably less than 3 seconds, still more preferably between 0.5 seconds and 2 seconds. This allows for a short comment by a second speaker, when a first speaker is speaking. Such a comment might be a confirmation (such as: "OK" or "That's fine!") or a protest (such as: "No, no" or "I disagree") and the like.

Still further, according to a preferred embodiment, the predetermined criterion is fulfilled, if a simultaneous receipt of the first and second speech data continues for a predetermined duration of at least 2 seconds. This definition is somehow different from the preceding one: it defines the point in time when the shifting of the frequencies shall start.

The shifting is most effective when at least in the case of a simultaneous receipt of first and second speech data, components at different frequencies in the first speech data are shifted to a frequency more distant from those frequencies to which there are components in the second speech data than without shifting. In other words, the frequency intervals are shifted away from each other. When from the two participants, the two voices are close as to their frequency components, at least one of them is shifted such as to be a little bit more lower or a little bit more higher in frequency than the other one is. Preferably, in that embodiment, both components at different frequencies in the first and second speech data are shifted in their frequencies. That means that one of the voices is shifted to a lower frequency interval, and the other one is shifted to a higher frequency interval, such that both become distant from each other, without a need to shift too much the individual voices.

The method might be, in a still further embodiment, complemented by a specific ending of the shifting: if (e.g. according to a second predetermined criterion further to the one named above) the shifting has been taking place after fulfilment of the predetermined criterion, but if at the same time the simultaneous receipt of first and second speech data has already come to an end for a predetermined period of time (e.g. for at least 2 seconds, still preferably more than 3 seconds, still more preferably more than 5 seconds), the method may not simply stop shifting but gradually reduce the amount of shifting. For instance, the third frequency could, for ending the shifting, become closer and closer to the first frequency, and the fourth frequency closer and closer to the second frequency. In the case of multiplying the frequencies by the same first factor, this factor could during the ending approach more and more 1 again.

In a second alternative of the inventive method, the predetermined criterion is related to a specific period in time, preferably a time interval at a specific day in the week, or in a month, or in the year. For instance, on Monday mornings between 8 a.m. and 10 a.m., the speakers, feeling less comfortable at the beginning of the week, generally might speak at a lower frequency, and there might be an automatic frequency shift to higher frequencies in order to give them a friendlier appearance.

In a third alternative of the inventive method, the predetermined criterion relates to whether or not there has been an input to an input device as to desiring the frequency shift. There might most simply be a switch which allows to turn on a frequency shift, or to turn it off.

The methods according to the second and third alternatives are not necessarily related to the situation with a plurality of speakers, but might equally apply with single speakers.

The first, second and third embodiments might be separately provided, but can also be applied in conjunction. For instance, if the device is programmed as to deal with specific conference telephone calls on Mondays, the method might be activated on Mondays only, whilst not being applied to conference telephone calls on other days of the week. Similarly, the function of shifting the frequencies might be undesired and turned off by using a specific switch, or turned on if desired. Still further, there might be a switch (or any other means indicating so) for relating the predetermined criterion to a specific period in time, indicating to desire the frequency shift.

The inventive device for handling conference telephone calls from a plurality of participants is configured to determine whether or not a predetermined criterion is fulfilled. The device is further configured to shift, if the predetermined criterion is fulfilled, a first frequency component of speech data from a first frequency to a third frequency and a second frequency component of the speech data from a second frequency to a fourth frequency. In a preferred embodiment, the predetermined criterion refers to whether or not at least two participants are speaking simultaneously.

The inventive hearing device, in particular an in-the-ear, completely-in-canal or behind-the-ear hearing aid, an earphone, a hearing protection device, or an ear-level communication, noise reduction or sound enhancement device includes a microphone and is configured to determine whether or not a predetermined criterion is fulfilled. The device is further configured to shift, if the predetermined criterion is fulfilled, a first frequency component of speech data from a first frequency to a third frequency and a second frequency component are these speech data from a second frequency to a fourth frequency. Preferably, the predetermined criterion refers to whether or not the microphone captures speech data from two different persons simultaneously, namely first speech data from a first person and second speech data from a second person. The shifting then relates to either the first speech data or the second speech data, or separately to both of them. In the latter case, this shifting might apply in different manners to speech data from the two different persons.

### DESCRIPTION OF THE DRAWINGS

The invention will in the following be in more detail described with respect to the drawings, wherein
- FIG. 1: shows a system including a device performing an embodiment of the inventive method, for handling conference telephone calls;
- FIG. 2: is a diagram showing different digital speech data in order to illustrate different situations for defining the predetermined criterion in an embodiment of the inventive method;
- FIG. 3: illustrates different digital speech data in order to illustrate different situations for defining the predetermined criterion in an embodiment of the inventive method;
- FIGs 4a and 4b: illustrate the frequency intervals of speech data provided by four different participants A, B, C and D without and with application of an embodiment of the inventive method, respectively;
- FIG. 4c: illustrates how speech data are shifted according to an embodiment of the inventive method;
- FIG. 5: is a flow chart illustrating an embodiment of the inventive method;
- FIG. 6: is a flow diagram showing another embodiment of the inventive method, and
- FIG. 7: is a table illustrating a further embodiment of the inventive method, and
- FIG. 8: illustrates a hearing aid that can be configured so as to provide for an embodiment of the present invention.

### DESCRIPTION OF PREFERRED EMBODIMENTS

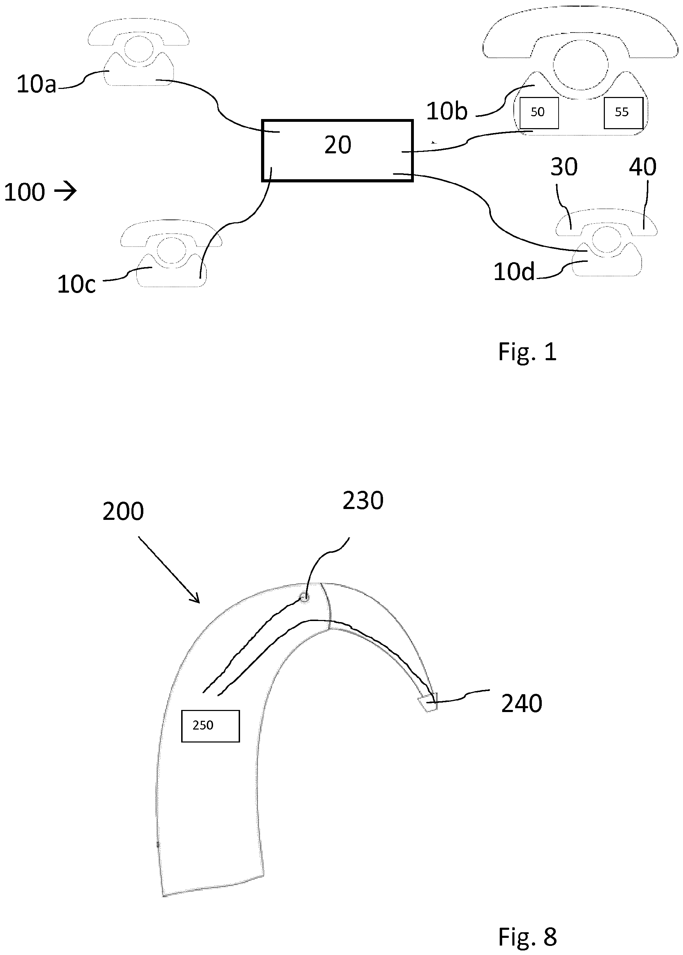

FIG. 1 displays a system indicated at 100 which enables to handle conference telephone calls. A plurality of telephone stations 10a, 10b, 10c and 10d are connected to a server 20. Each telephone, as exemplarily depicted with the telephone 10d, includes a microphone 30 and a loudspeaker 40. At least one of the telephone stations includes a processor 50 which is able to arrange for a conference telephone call. In an alternative version not depicted in FIG. 1, the server 20 could be able to provide for the telephone conference. There is optionally a switch 55 provided enabling the user to turn application of the inventive method on or off.

Each telephone is able to receive speech data from a respective participant via its respective microphone 30, to transmit same to the server 20 and to receive similar speech data as transmitted from other telephones from the server 20 and output these speech data via the loudspeaker 40.

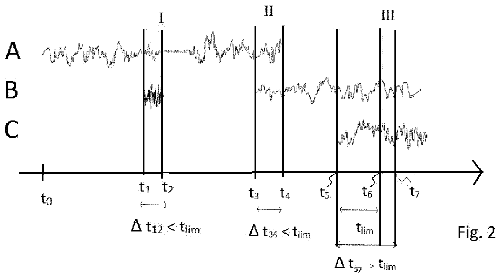

FIG. 2 shows different situations which might occur during a conference telephone call. The method always checks the respective situation and reacts accordingly.

In the lowermost portion of FIG. 2, the time is depicted. The conference telephone call starts at time t₀, and participant A starts to speak. At the point in time t₁, participant B starts to speak simultaneously to participant A (situation I), but ends already at the point in time t₂, such that the total duration of participant B's contribution has a duration of t₂-t₁= Δt₁₂ which is smaller than tₗᵢₘ. Participant B's contribution might just be a short comment such as "of course", "I agree", "OK", "oh no", or the like. Since the total duration of two persons speaking is less than tₗᵢₘ, nothing needs to be done. Starting from the time point t₂, participant A continues to speak alone again, when at the point in time t₃ participant B starts to talk. In this second situation II, participant A stops speaking at the point in time t₄, wherein the overall duration of the simultaneous speech is t₄-t₃=Δt₃₄, which is smaller than tₗᵢₘ. Here, participant A has recognized that participant B starts to make a further contribution and stops talking. Again, with the total duration of two persons speaking being less then tₗᵢₘ, nothing needs to be done.

At point in time t₅, now, participant C starts to talk, and this time, at a point in time t₆, both participants B have been talking for a predetermined time tₗᵢₘ simultaneously. Then, as soon as tₗᵢₘ has been exceeded, the method detects at a point in time t₇ that the speech data need to be manipulated: in contrast to what happened in situations I and II, in the present situation III, the method starts to shift the frequencies in the speech data of either participant B or participant C, or both of them, in order to have the listener better distinguish between these two participants.

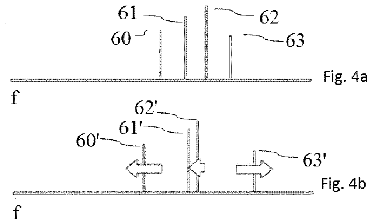

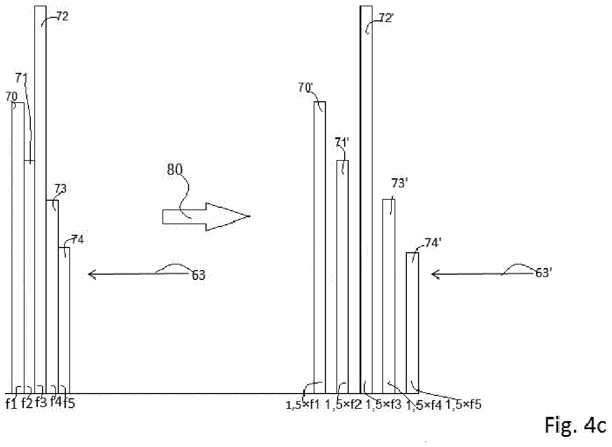

This is best explained with respect to FIG. 4a, FIG. 4b and FIG. 4c:

FIGs. 4a and b depict different frequency intervals which the voices of four different participants speaking simultaneously exhibit, see as indicated at 60, 61, 62 and 63. The frequencies are now shifted, namely the frequency of interval 60 is shifted to lower frequencies, to obtain frequency interval 60', frequency interval 61 is shifted a little bit as well to obtain frequency interval 61', frequency interval 62 is shifted to obtain frequency interval 62' and frequency interval 63 is shifted to higher frequencies, so as to obtain frequency interval 63'.

FIG. 4c depicts the frequency shift of frequency interval 63. Frequency interval 63 has five frequency components, namely in an interval about frequency f₁, there is a first frequency component having an amplitude as indicated by bar 70, about frequency f₂, there is a second frequency component having an amplitude as indicated by bar 71, about frequency f₃, there is a third frequency component having an amplitude as indicated by bar 71, about frequency f₄, there is a fourth frequency component having an amplitude as indicated by bar 73 and about frequency f₅, and there is a fifth frequency component having an amplitude as indicated by bar 74. The width of the individual bars is the width on which the frequency analysis is based. With a Fast Fourier Transform, the width is usually determined by the sampling time intervals and inversionally proportional to these.

The shifting according to arrow 80 has presently the following effect: frequency component 70 is shifted to a higher frequency such as, e.g. frequency f₁ as multiplied by a factor, which is presently shown to be 1.5. This is depicted by bar 70', which has the same length as bar 70, i.e. the relative amplitude in the frequency component is maintained, whilst shifting the frequency of the frequency component. Similarly, the second component is shifted to a frequency 1.5 x f₂, such as to obtain bar 71', which has the same height as bar 71, indicating the same amplitude or frequency component. The third frequency component 72 is shifted to obtain frequency component 72' at a frequency 1.5 x f₃ and an interval about same, the fourth frequency component 73 is shifted to obtain frequency component 73' at a frequency 1.5 x f4 and frequency interval about same, and the fifth frequency component 74 is shifted to obtain frequency component 74' at a frequency of 1.5 x f₅.

Shifting all of the frequencies to a higher frequency has the effect of obtaining a voice which sounds as if the speaker had inhaled helium, i.e. would speak at a higher pitch, whilst still his voice and manner of speaking is recognizable.

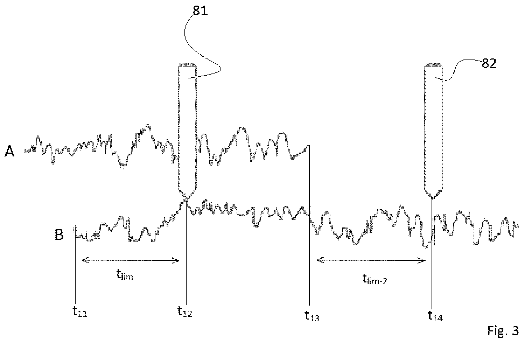

FIG. 3 now depicts again what happens if at least two speakers speak simultaneously, i.e. in the situation of a congestion: At point t₁₁, the time starts to count since participant B starts to speak, whilst participant A has already spoken beforehand. At point in time t₁₂, the predetermined time is over, and the shifting starts, as indicated by arrow 81.

At point in time t₁₃, the first participant A terminates his talking, and following a further predetermined time tₗᵢₘ₋₂, which is usually different from tₗᵢₘ, but might be identical to tₗᵢₘ, at point in time t₁₄, the shifting can be ended as indicated by arrow 82. Ending the shifting can simply be a complete fall-back to the original frequencies, or a fade-out of the shifting, wherein the factor multiplying the individual frequencies is reduced more and more from 1.5 to 1, in the example of FIG. 4c, i.e. approaches 1 from the side to which it was shifted. In the case there is a shift to lower frequencies, of course, the factor is smaller than 1 and the factor increases until again the original frequencies are reached when the factor becomes 1.

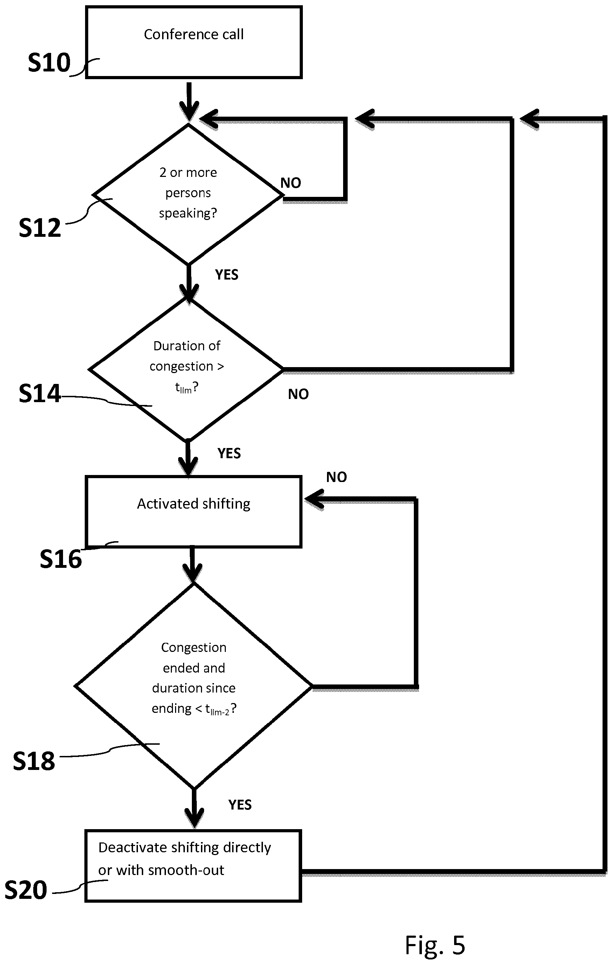

FIG. 5 is a flow chart illustrating the logical flow of the present method:
In step S10, a conference call is initiated. Again and again, as indicated in step S12, it is determined whether two or more persons are speaking (congestion), and this is repeated as long as the answer is "no", until the answer becomes "yes" and the method turns to step S14. In step S14, it is determined whether duration of the congestion exceeds tₗᵢₘ, and as long as the answer is "no", there is a return to step S12. If the answer is to the affirmative, in step S16, the shifting as explained above, is activated. Following step S16, it is determined in step S18, whether that congestion ended and the duration since it came to an end is smaller than tₗᵢₘ₋₂. As long as this is not the case, the method returns to step S16. If the answer is in the affirmative, in step S20, the shifting is deactivated either directly or with a smooth-out (fade-out).

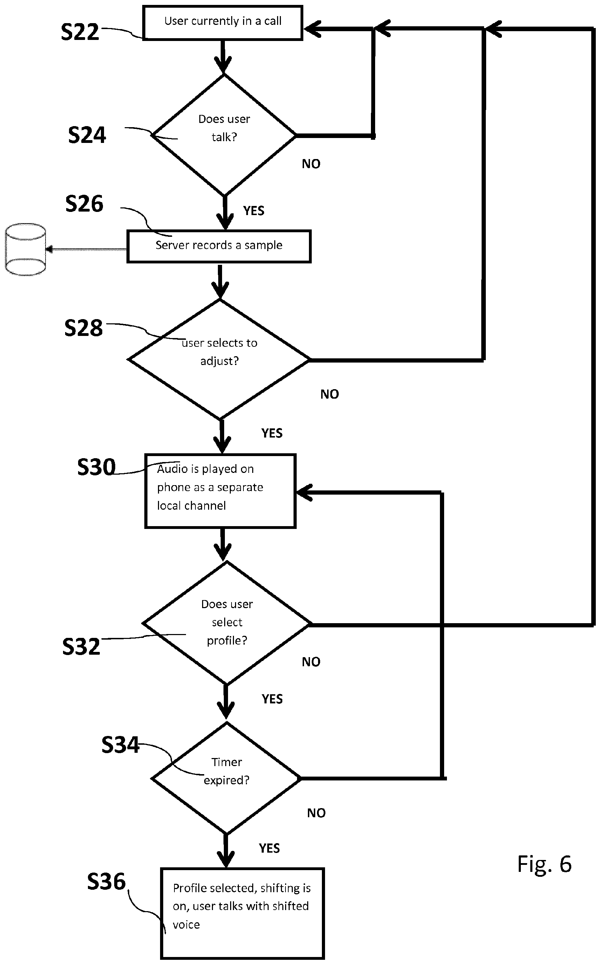

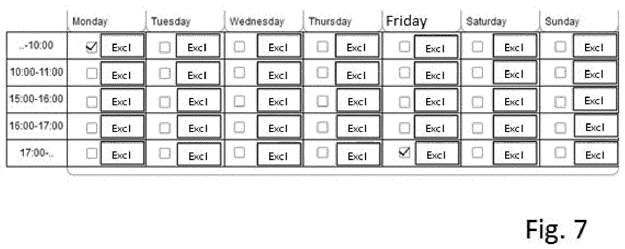

In the following, a second embodiment of the inventive method will be discussed with respect to FIGs 6 and 7.

The shifting as explained above with respect to FIG. 4c can take effect also when a single person is speaking. Then, another predetermined criterion than that of there being a congestion would need to be applied. For instance, one can apply such shifting on special times of a day or in the week: the voice shifting can be activated automatically depending on a certain schedule. The company where the conference telephone calls are to take place might decide that all calls during Monday morning should be shifted to a happier tone, so that employees can feel better during calls. Or even on Friday's internal conversation voice filter will be applied to give a funny approach to conversation (flanger or helium sound). This can be set up in the system as scheduled depending whether there is an external or external call and of course depending on who calls (e.g. as to the importance of the person who is calling - nobody would desire this feature between the CEO and other members!). The method could be applied in such a manner in environments as theatres and/or entertainment services.

In addition thereto, the user may be able to select, by means of a switch, the settings of the shifting.

FIG. 6 explains that in step S22, a user is currently in a call, and in step S24 it is determined whether or not the user talks. Only in the affirmative, the method goes on to step S26 and the server 20 records a sample of the user's voice. By such sampling, it can be determined in which manner the shifting could take place at a later point in time. In step S28, it is determined, whether the user has selected to adjust, e.g., by means of his switch 55 on his station. Only in the affirmative, in step S30, audio is played on the telephone as a separate local channel. In step S32, it is determined whether or not the user has selected a profile, such as the scheduling named above. In case no profile has been selected, the method returns to step S22. In contrast thereto, in the affirmative, the method goes on to step S34, wherein it is determined whether or not a timer has expired. If this is not the case, the audio is still played on the telephone as a separate local channel, according to step S30. As soon as the timer has expired, in step S36, the profile is selected, shifting is on and the user appears to talk with the shifted voice.

The user might, according to FIG. 7, place a cross for the time of prior to 10 a.m. on Mondays and after 5 p.m. on Fridays in order to activate the voice shifting at these times. In the remainder of the week, there is no voice shifting desired. In the field "EXCL", the user can even define other participants with whom he would like to always speak with a normal, non-shifted voice.

The method of treating of speech data can equally be used in a hearing aid such as indicated in FIG. 8 at 200: Such hearing aid has a microphone 230, a loudspeaker 240 and a central processor 250 and is able to shift speech data as explained with respect to FIG. 4c above, either in the case of there being first and second speech data received from different persons via the microphone 230, or in case the user of the hearing aid 200 would explicitly desire such shifting.

## Claims

1. A hearing device (200), in particular an in-the-ear, completely-in-canal or behind-the-ear hearing aid, an earphone, a hearing protection device, or an ear-level communication, noise reduction or sound enhancement device, said hearing device including a microphone (230) and being configured to determine whether or not a predetermined criterion is fulfilled, said predetermined criterion referring to whether or not the microphone captures speech data from two different persons simultaneously, wherein said device is further configured to shift, if the predetermined criterion is fulfilled, a first frequency component of speech data stemming from a first person from a first frequency to a third frequency and a second frequency component of these speech data stemming from the first person from a second frequency to a fourth frequency.

2. Hearing device (200) according to claim 1, wherein said predetermined criterion is related to the speech data themselves.

3. Hearing device (200) according to claim 2, wherein the predetermined criterion is not fulfilled, if a simultaneous receipt of first and second speech data ends after a predetermined period of time, which has preferably a duration of between 0.1 seconds and 5 seconds, more preferably less than 3 seconds, still more preferably between 0.5 seconds and 2 seconds.

4. Hearing device (200) according to claim 2 or claim 3, wherein the predetermined criterion is fulfilled if a simultaneous receipt of the first and second speech data continues for a predetermined duration of at least 2 seconds.

5. Hearing device (200) according to any one of claims 2 to 4, wherein at least in the case of a simultaneous receipt of first and second speech data, the device (200) is configured to shift components at different frequencies in the first speech data to frequencies more distant from those frequencies to which there are components in the second speech data than without shifting, wherein preferably both components at different frequencies in the first and second speech data are shifted in their frequency.

6. Hearing device (200) according to anyone of claims 2 to 5, wherein in the case of a simultaneous receipt of first and second speech data, after a second predetermined period of time after the simultaneous speech has come to an end, the device (200) is configured to reduce the amount of shifting subsequently including bringing the second frequency data closer and closer to the first and the fourth frequency closer and closer to the third frequency.

7. Hearing device (200) according to anyone of the preceding claims, wherein said predetermined criterion is related to a specific period in time, preferably a time interval at a specific day in the week, or in a month, or in a year.

8. Hearing device (200) according to anyone of the preceding claims, wherein said predetermined criterion relates to whether or not there has been an input to an input device as to desiring the frequency shift.

9. Hearing device (200) according to anyone of the preceding claims, wherein said third frequency is obtained by multiplying the first frequency by a first factor of between 0.0075 and 32 and said fourth frequency is obtained by multiplying the second frequency by the same first factor.

## Patentansprüche

1. Hörgerät (200), insbesondere eine Im-Ohr-, eine Vollständig-im-Gehörgang- oder eine Hinter-dem-Ohr-Hörhilfe, ein Ohrhörer, ein Hörschutzgerät, ein Kommunikations-, ein Rauschverminderungs- oder ein Klangverbesserungsgerät auf Ohrebene, wobei das Hörgerät ein Mikrofon (230) beinhaltet und dazu konfiguriert ist, zu bestimmen, ob ein vorbestimmtes Kriterium erfüllt ist oder nicht, wobei sich das vorbestimmte Kriterium darauf bezieht, ob das Mikrofon Sprachdaten von zwei verschiedenen Personen gleichzeitig aufnimmt oder nicht, wobei das Gerät ferner dazu konfiguriert ist, eine erste Frequenzkomponente von Sprachdaten, die von einer ersten Person stammt, von einer ersten Frequenz zu einer dritten Frequenz und eine zweite Frequenzkomponente dieser Sprachdaten, die von der ersten Person stammt, von einer zweiten Frequenz zu einer vierten Frequenz zu verlagern, wenn das vorbestimmte Kriterium erfüllt ist.

2. Hörgerät (200) nach Anspruch 1, wobei sich das vorbestimmte Kriterium auf die Sprachdaten selbst bezieht.

3. Hörgerät (200) nach Anspruch 2, wobei das vorbestimmte Kriterium nicht erfüllt ist, wenn ein gleichzeitiger Empfang von ersten und zweiten Sprachdaten nach einem vorbestimmten Zeitraum endet, der vorzugsweise eine Dauer von zwischen 0,1 Sekunden und 5 Sekunden, bevorzugter von weniger als 3 Sekunden und noch weiter bevorzugt zwischen 0,5 Sekunden und 2 Sekunden aufweist.

4. Hörgerät (200) nach Anspruch 2 oder Anspruch 3, wobei das vorbestimmte Kriterium erfüllt ist, wenn ein gleichzeitiger Empfang der ersten und der zweiten Sprachdaten für eine vorbestimmte Dauer von mindestens 2 Sekunden anhält.

5. Hörgerät (200) nach einem der Ansprüche 2 bis 4, wobei zumindest in dem Fall eines gleichzeitigen Empfangs von ersten und zweiten Sprachdaten das Gerät (200) dazu konfiguriert ist, Komponenten bei unterschiedlichen Frequenzen in den ersten Sprachdaten zu Frequenzen zu verlagern, die weiter entfernt von jenen Frequenzen liegen, für welche sie Komponenten in den zweiten Sprachdaten ohne Verlagerung sind, wobei beide Komponenten vorzugsweise bei unterschiedlichen Frequenzen in den ersten und den zweiten Sprachdaten in ihrer Frequenz verlagert werden.

6. Hörgerät (200) nach einem der Ansprüche 2 bis 5, wobei in dem Fall eines gleichzeitigen Empfangs von ersten und zweiten Sprachdaten, nachdem ein zweiter vorbestimmter Zeitraum nach der gleichzeitigen Sprache geendet hat, das Gerät (200) dazu konfiguriert ist, das Ausmaß an Verlagerung anschließend zu reduzieren, was beinhaltet, dass die zweiten Frequenzdaten Stück für Stück näher an die ersten und die vierte Frequenz Stück für Stück näher an die dritte Frequenz gebracht werden.

7. Hörgerät (200) nach einem der vorstehenden Ansprüche, wobei sich das vorbestimmte Kriterium auf einen konkreten Zeitraum bezieht, vorzugsweise auf ein Zeitintervall an einem konkreten Tag in der Woche oder in einem Monat oder in einem Jahr.

8. Hörgerät (200) nach einem der vorstehenden Ansprüche, wobei sich das vorbestimmte Kriterium darauf bezieht, ob eine Eingabe in ein Eingabegerät mit dem Wunsch nach der Frequenzverlagerung stattgefunden hat oder nicht.

9. Hörgerät (200) nach einem der vorstehenden Ansprüche, wobei die dritte Frequenz durch Multiplizieren der ersten Frequenz mit einem ersten Faktor zwischen 0,0075 und 32 erhalten wird und die vierte Frequenz durch Multiplizieren der zweiten Frequenz mit dem gleichen ersten Faktor erhalten wird.

## Revendications

1. Appareil auditif (200), en particulier prothèse auditive dans l'oreille, complètement dans le canal ou derrière l'oreille, écouteur, dispositif de protection auditive, ou dispositif de communication, de réduction du bruit ou d'amélioration du son au niveau de l'oreille, ledit appareil auditif incluant un microphone (230) et étant configuré pour déterminer si oui ou non un critère prédéterminé est rempli, ledit critère prédéterminé se rapportant à si oui ou non le microphone capture des données de parole provenant de deux personnes différentes simultanément, dans lequel ledit appareil est en outre configuré pour déplacer, si le critère prédéterminé est rempli, une première composante de fréquence de données de parole issues d'une première personne depuis une première fréquence jusqu'à une troisième fréquence et une seconde composante de fréquence de ces données de parole issues de la première personne depuis une deuxième fréquence jusqu'à une quatrième fréquence.

2. Appareil auditif (200) selon la revendication 1, dans lequel ledit critère prédéterminé est lié aux données de parole elles-mêmes.

3. Appareil auditif (200) selon la revendication 2, dans lequel le critère prédéterminé n'est pas rempli, si une réception simultanée de premières et secondes données de parole se termine après une période de temps prédéterminée, qui a de préférence une durée entre 0,1 seconde à 5 secondes, de manière davantage préférée de moins de 3 secondes, de manière encore plus préférée entre 0,5 seconde et 2 secondes.

4. Appareil auditif (200) selon la revendication 2 ou la revendication 3, dans lequel le critère prédéterminé est rempli si une réception simultanée des premières et secondes données de parole continue pendant une durée prédéterminée d'au moins 2 secondes.

5. Appareil auditif (200) selon l'une quelconque des revendications 2 à 4, dans lequel au moins dans le cas d'une réception simultanée de premières et secondes données de parole, l'appareil (200) est configuré pour déplacer des composantes à des fréquences différentes dans les premières données de parole jusqu'à des fréquences plus distantes des fréquences jusqu'auxquelles il y des composantes dans les secondes données de parole que sans déplacement, dans lequel de préférence les deux composantes à des fréquences différentes dans les premières et secondes données de parole sont déplacées dans leur fréquence.

6. Appareil auditif (200) selon l'une quelconque des revendications 2 à 5, dans lequel dans le cas d'une réception simultanée de premières et secondes données de parole, après qu'une seconde période de temps prédéterminée après la parole simultanée s'est terminée, l'appareil (200) est configuré pour réduire la quantité de déplacement par la suite y compris le fait d'amener les secondes données de fréquence de plus en plus près des premières et la quatrième fréquence de plus en plus près de la troisième fréquence.

7. Appareil auditif (200) selon l'une quelconque des revendications précédentes, dans lequel ledit critère prédéterminé est lié à une période de temps spécifique, de préférence un intervalle de temps à un jour spécifique dans la semaine, ou dans un mois, ou dans une année.

8. Appareil auditif (200) selon l'une quelconque des revendications précédentes, dans lequel ledit critère prédéterminé est lié à si oui ou non il y a eu une entrée sur un dispositif d'entrée quant au souhait du déplacement de fréquence.

9. Appareil auditif (200) selon l'une quelconque des revendications précédentes, dans lequel ladite troisième fréquence est obtenue en multipliant la première fréquence par un premier facteur entre 0,0075 et 32 et ladite quatrième fréquence est obtenue en multipliant la deuxième fréquence par le même premier facteur.
